# EUROPEAN PATENT APPLICATION

(11) **EP 4 797 509 A1**
(43) Date of publication of application: **26.08.2026**
(21) Application number: 26157747.2
(22) Date of filing: 11.02.2026
(51) Int. Cl.: H02K 9/19, H02K 3/24

(54) **ELECTRIC MOTOR**

(30) Priority: 19.02.2025 JP 2025024908
(71) Applicant: Toyota Jidosha Kabushiki Kaisha, Toyota-shi, Aichi-ken 471-8571 (JP)
(72) Inventor: AWATA, Hideya, Toyota-shi, Aichi-ken, 471-8571 (JP); IZUMI, Masashi, Toyota-shi, Aichi-ken, 471-8571 (JP); OHIRA, Kengo, Toyota-shi, Aichi-ken, 471-8571 (JP); KAWAKAMI, Jun, Toyota-shi, Aichi-ken, 471-8571 (JP); NAITO, Shuma, Toyota-shi, Aichi-ken, 471-8571 (JP)
(74) Representative: TBK

(57) **Abstract**

An electric motor (100) disclosed includes: a stator (3) that has a cylindrical shape; and a refrigerant pipe (10) that has a ring shape and that is disposed coaxially with the stator (3). The refrigerant pipe (10) includes an ejection hole (11) that faces the stator (3), an inflow hole (12) through which a refrigerant flows into the refrigerant pipe (10), and a discharge hole (13) through which the refrigerant is removed from the refrigerant pipe (10). The discharge hole (13) is positioned below the ejection hole (11) and the inflow hole (12).

## Description

### BACKGROUND OF THE INVENTION

### 1. Field of the Invention

The technology disclosed in the present specification relates to an electric motor.

### 2. Description of Related Art

Japanese Unexamined Patent Application Publication No. 2012-005204 (JP 2012-005204 A) discloses an electric motor that cools a stator with a liquid refrigerant. The refrigerant is stored at the bottom of a housing that houses a rotor and the stator. The electric motor includes a refrigerant pipe and a pump that guide the refrigerant at the bottom of the motor housing to an upper portion of the stator. The refrigerant collected at the bottom of the housing is sent to the upper portion of the stator through the refrigerant pipe by the pump, and the refrigerant falls onto the stator from a distal end of the refrigerant pipe.

### SUMMARY OF THE INVENTION

The present disclosure provides an electric motor that effectively cools the stator by the liquid refrigerant.

An electric motor according to an aspect of the present disclosure includes: a stator that has a cylindrical shape; and a refrigerant pipe that has a ring shape and that is disposed coaxially with the stator. The refrigerant pipe includes an ejection hole that faces the stator; an inflow hole through which a refrigerant flows into the refrigerant pipe; and a discharge hole through which the refrigerant is removed from the refrigerant pipe. The discharge hole is positioned below the ejection hole and the inflow hole.

In the above configuration, the ring-shaped refrigerant pipe including the ejection hole is disposed coaxially with the stator. The refrigerant ejected from the ejection hole makes contact with the stator, and thereby, the stator can be effectively cooled.

In the refrigerant pipe having a ring shape, there is fear that the refrigerant is retained at a lower side in the refrigerant pipe when the pump is stopped. In the electric motor disclosed in the present disclosure, the discharge hole is positioned below the ejection hole and the inflow hole, and therefore, when the feed of the refrigerant to the refrigerant pipe by the pump is stopped, the refrigerant remaining in the refrigerant pipe is discharged. In the case where the discharge hole is provided at the lowest portion of the refrigerant pipe, all refrigerant is removed from the refrigerant pipe, after the feed of the refrigerant is stopped. The electric motor disclosed in the present specification provides an advantage in that the refrigerant is not retained in the refrigerant pipe.

In the electric motor according to the aspect of the present disclosure, a diameter of the discharge hole may be smaller than a diameter of the ejection hole.

When a large discharge hole for refrigerant removal is provided at the lower side in the refrigerant pipe, there is fear of decrease in the flowing power of the refrigerant that is ejected from the ejection hole. However, the refrigerant may be removed from the discharge hole little by little, and therefore, the diameter may be small. During the feed of the refrigerant to the refrigerant pipe, the amount of the refrigerant that is ejected from the ejection hole is larger than the amount of the refrigerant that is discharged from the discharge hole. The discharge hole having a smaller diameter makes it possible to restrain the decrease in the flowing power of the refrigerant that is ejected.

In the electric motor according to the aspect of the present disclosure, the discharge hole may be provided at a lowest portion of the refrigerant pipe.

Details and further improvements of the technology disclosed in the present specification will be described in "DETAILED DESCRIPTION OF EMBODIMENTS".

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a sectional view of an electric motor in an embodiment; and
FIG. 2 is a sectional view of the electric motor taken along line II-II in FIG. 1.

### DETAILED DESCRIPTION OF EMBODIMENTS

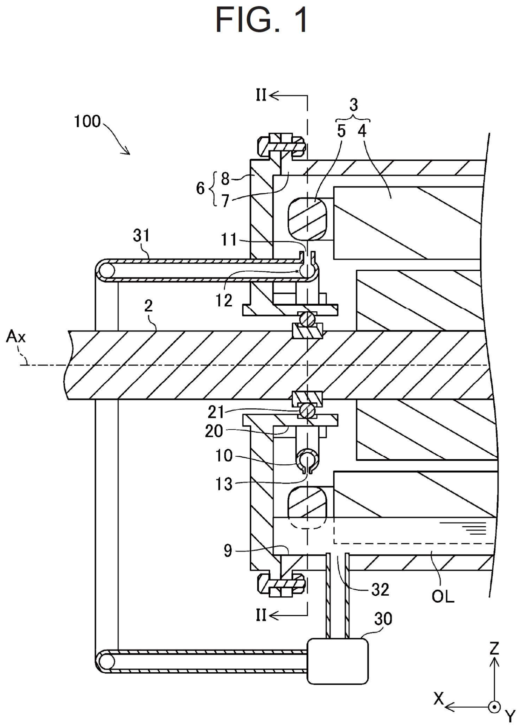

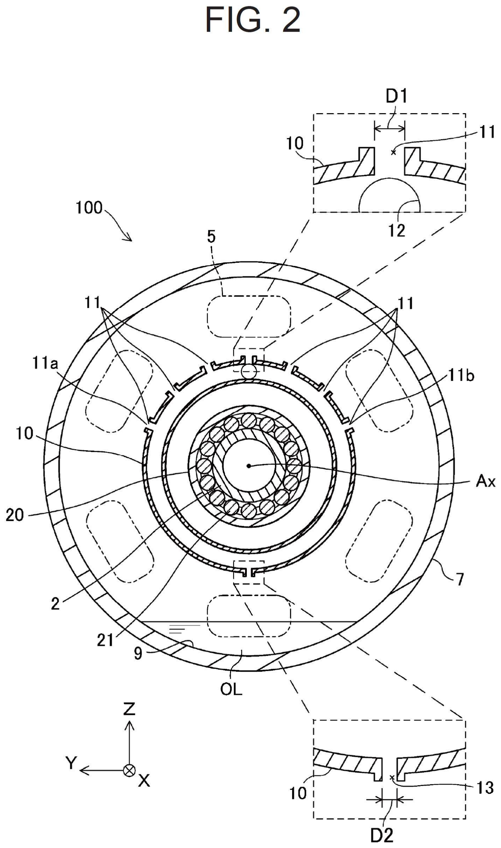

An electric motor 100 in an embodiment will be described with reference to the drawings. Hereinafter, for convenience of description, the "electric motor" is written as a "motor". FIG. 1 shows a sectional view of the motor 100. FIG. 2 shows a sectional view of the motor 100 taken along line II-II in FIG. 1. In a coordinate system in the figures, a Z-axis coincides with a vertical direction, and a plane (XY plane) including an X-axis and a Y-axis coincides with a horizontal plane. A +Z-direction coincides with a vertically upward direction. In the motor 100, a liquid refrigerant is used. Generally, in a motor in which a liquid refrigerant is used, the attitude (the attitude with respect to the gravity direction) at the time of the use is determined, for ensuring the circulation of the refrigerant. In the motor 100, the attitude at the time of the use is determined such that an axis line Ax of a stator 3 having a cylindrical shape extends in a horizontal direction, a bottom of a housing 6 that houses the stator 3 and a rotor 2 serves as a refrigerant storage portion 9, and the refrigerant storage portion 9 is positioned on a vertically lower side of the stator 3. FIG. 1 shows a section when the motor 100 is cut along a vertical plane that includes the axis line Ax. In FIG. 1, some parts of the motor 100 are not illustrated. FIG. 2 shows a section when the motor 100 is cut along a plane that is orthogonal to the axis line Ax and that includes a refrigerant pipe 10 (described later).

The motor 100 includes the rotor 2 and the stator 3. The rotor 2 has a columnar shape, and the stator 3 has a cylindrical shape. The rotor 2 is disposed coaxially with the stator 3 having a cylindrical shape. The axis line Ax in the figures shows axis lines of the rotor 2 and the stator 3.

The stator 3 includes a stator core 4 and coil ends 5. A plurality of coils is wound around the stator core 4, and both ends of each coil in the direction of the axis line Ax correspond to the coil ends 5. Although the stator 3 includes a plurality of coil ends 5, some coil ends are not illustrated in FIG. 1.

The rotor 2 and the stator 3 are housed in the housing 6. The housing 6 is constituted by a housing body 7 that has a bottomed cylindrical shape and a housing cover 8 that closes an opening of the housing body 7. In FIG. 1, a part of the motor 100 that includes a bottomed portion of the cylinder of the housing body 7 is not illustrated. The housing body 7 and the housing cover 8 are fastened to each other by a plurality of bolts. The stator 3 is fixed to the housing body 7.

The rotor 2 is supported in the housing 6 through a bearing 21, in a rotatable manner. A bearing cylinder 20 having a cylindrical shape is provided on a back surface of the housing cover 8 (on an inner side surface of the housing cover 8), coaxially with the axis line Ax, and the bearing 21 is disposed between the inner circumference of the bearing cylinder 20 and the outer circumference of the rotor 2. The rotor 2 is supported in the housing 6 through the bearing 21, in a rotatable manner. The bearing cylinder 20 is opened toward the outer side of the housing 6, and a main shaft of the rotor 2 extends to the exterior through the bearing cylinder 20. Although not illustrated, a bearing cylinder is provided also in the housing body 7, and a bearing is disposed between the inner circumference of the bearing cylinder and the outer circumference of the rotor 2. The rotor 2 is supported in the housing 6 through the bearing 21 (and the bearing in the housing body 7), in a rotatable manner.

The motor 100 cools the stator 3 (coil ends 5) with the liquid refrigerant. Typically, the refrigerant may be oil. In the housing 6, a refrigerant pipe 10 having a ring shape is disposed (see FIG. 2). In FIG. 2, the coil ends 5 are illustrated by imaginary lines. The coil ends 5 are arrayed around the axis line Ax in a circumferential direction.

The refrigerant pipe 10 having a ring shape is disposed on the inner side of the stator 3, coaxially with the axis line Ax of the stator 3. More specifically, the refrigerant pipe 10 is disposed on the inner side of the coil ends 5 that are arrayed around the axis line Ax in the circumferential direction.

A plurality of refrigerant ejection holes 11 is provided at an upper portion of the refrigerant pipe 10. The refrigerant ejection holes 11 are arrayed on the outer circumference side of the refrigerant pipe 10 having a ring shape, along a circumferential direction. The refrigerant ejection holes 11 are arrayed along the circumferential direction of the refrigerant pipe 10, and each refrigerant ejection hole 11 faces the stator 3 (coil end 5). The refrigerant ejection holes 11 eject the refrigerant toward the coil ends 5 that are positioned on the outer circumference side of the refrigerant pipe 10. The bottom portion of the housing 6 in the vertical direction serves as the refrigerant storage portion 9, and the refrigerant (oil OL) at the refrigerant storage portion 9 is fed to the refrigerant pipe 10 by a pump 30, and is ejected from the refrigerant ejection holes 11, Since the refrigerant is ejected from the refrigerant ejection holes 11 that are arrayed along the inner circumference of the stator 3, the motor 100 can effectively cool the stator 3. The motor 100 may include only one refrigerant ejection hole. Even in the case of one refrigerant ejection hole, it is possible to effectively cool the stator 3, by ejecting the refrigerant toward the stator 3.

The refrigerant pipe 10 includes a refrigerant inflow hole 12 at a highest portion in the vertical direction. To the refrigerant inflow hole 12, one end of a refrigerant supply pipe 31 is connected. The refrigerant supply pipe 31 extends along the axis line Ax of the stator 3, and penetrates the housing cover 8. The refrigerant supply pipe 31 extends to a lower side in the motor 100 while bypassing the main shaft of the rotor 2, in the exterior of the housing 6, and the other end of the refrigerant supply pipe 31 is connected to a drain hole 32 that is provided at the bottom of the refrigerant storage portion 9. The pump 30 is attached to the refrigerant supply pipe 31. As described above, the pump 30 feeds the refrigerant (oil OL) collected at the refrigerant storage portion 9, to the refrigerant pipe 10. By the pressure of the refrigerant pushed by the pump 30, the refrigerant in the refrigerant pipe 10 is ejected from the refrigerant ejection holes 11 toward the stator 3 (coil ends 5).

The refrigerant ejection holes 11 are provided only at the upper portion (upper half) of the refrigerant pipe 10, and the refrigerant ejected from the refrigerant ejection holes 11 reaches an upper portion (coil ends 5 positioned on a vertically upper side) of the stator 3. The refrigerant falls from the coil ends 5 on the vertically upper side to coil ends 5 on a vertically lower side by gravity. Thereby, the refrigerant spreads over all coil ends 5. That is, the refrigerant spreads over the whole circumference of the stator 3 having a cylindrical shape, as viewed from a direction along the axis line Ax. The stator 3 is effectively cooled.

The refrigerant inflow hole 12 is positioned at the highest portion of the refrigerant pipe 10 having a ring shape. The refrigerant fed to the refrigerant pipe 10 by the pump 30 is divided and flows from the refrigerant inflow hole 12 to both sides of the refrigerant pipe 10 having a ring shape, and is ejected from each of the refrigerant ejection holes 11. When the pump 30 is stopped, the refrigerant remaining in the refrigerant pipe 10 moves out from the refrigerant ejection holes 11 by gravity, so that the liquid level of the refrigerant decreases.

Refrigerant ejection holes that are of the refrigerant ejection holes 11 and that are at positions that are lowest in the vertical direction are referred to as lowest-position refrigerant ejection holes 11a, 11b (see FIG. 2). When the liquid level of the refrigerant decreases to the level of the lowest-position refrigerant ejection holes 11a, 11b after the stop of the pump 30, the refrigerant stops moving out from the refrigerant ejection holes 11. A refrigerant discharge hole 13 is provided at a lowest position of the refrigerant pipe 10, and the refrigerant is discharged from the refrigerant discharge hole 13 to the exterior of the refrigerant pipe 10. Accordingly, after the pump 30 is stopped, the refrigerant is not retained in the refrigerant pipe 10.

While the pump 30 is being driven, the refrigerant is ejected from the refrigerant ejection holes 11, and is ejected also from the refrigerant discharge hole 13. However, the number of refrigerant discharge holes 13 is one while the number of refrigerant ejection holes 11 is a plural number, and moreover, a diameter D2 of the refrigerant discharge hole 13 is smaller than a diameter D1 of the refrigerant ejection hole 11. Therefore, the flow rate of the refrigerant that moves out from the refrigerant discharge hole 13 is significantly smaller than the total flow rate of the refrigerant that is ejected from the refrigerant ejection holes 11. Therefore, the refrigerant discharge hole 13 hardly decreases the flowing power of the refrigerant that is ejected from the refrigerant ejection holes 11. The refrigerant discharge hole 13 restrains the decrease in the flowing power of the refrigerant that is ejected from the refrigerant ejection holes 11, and therewith, prevents the retention of the refrigerant in the refrigerant pipe 10 after the stop of the pump 30.

Other structural characteristics about the refrigerant pipe 10 will be described below. Although not illustrated, the refrigerant pipe 10 is fixed to the back surface of the housing cover 8, at least at three spots.

As described above, the bearing cylinder 20 to which the bearing 21 supporting the rotor 2 in a rotatable manner is attached is provided on the back surface of the housing 6 (housing cover 8), and the refrigerant pipe 10 is disposed between the bearing cylinder 20 and the stator 3 (coil ends 5). The bearing cylinder 20 is provided coaxially with the rotor 2 and the stator 3, and a ring-shaped space between the bearing cylinder 20 and the stator 3 is originally a dead space. The refrigerant pipe 10 effectively utilizes the dead space.

Attentions about the technology described in the embodiment will be described. The refrigerant inflow hole 12 is provided at the highest portion of the refrigerant pipe 10 having a ring shape, but the position of the refrigerant inflow hole 12 does not need to be the highest portion of the refrigerant pipe 10. It is desirable that the refrigerant discharge hole 13 is provided at the portion of the refrigerant pipe 10 that is lowest in the vertical direction, but the refrigerant discharge hole 13 only needs to be disposed below the refrigerant inflow hole 12 and the refrigerant ejection holes 11 (the lower side in the vertical direction). After the pump 30 is stopped, in the refrigerant pipe 10, the refrigerant is not retained on the upper side of the refrigerant discharge hole 13.

In the motor 100 in the embodiment, the diameter D2 of the refrigerant discharge hole 13 is smaller than the diameter D1 of the refrigerant ejection hole 11 It is desirable that the diameter of the refrigerant discharge hole is smaller than the diameter of the refrigerant ejection hole, but the diameter of the refrigerant discharge hole does not need to be smaller than the diameter of the refrigerant ejection hole.

The specific examples of the present invention have been described above in detail. The specific examples of the present invention are just examples, and do not limit the claims. The technology disclosed in the claims includes various modifications and alterations of the above-exemplified specific examples. Technology elements described in the present specification or the drawings exert technical utility independently or by various combinations, and are not limited to combinations described in the claims at the time of the filing. Moreover, the technology exemplified in the present specification or the drawings can achieve a plurality of objects at the same time, and has technical utility simply by achieving one of the objects.

## Claims

1. An electric motor (100) comprising:
a stator (3) that has a cylindrical shape; and
a refrigerant pipe (10) that has a ring shape and that is disposed coaxially with the stator (3), wherein:
the refrigerant pipe (10) includes
an ejection hole (11) that faces the stator (3),
an inflow hole (12) through which a refrigerant flows into the refrigerant pipe (10), and
a discharge hole (13) through which the refrigerant is removed from the refrigerant pipe (10); and
the discharge hole (13) is positioned below the ejection hole (11) and the inflow hole (12).

2. The electric motor (100) according to claim 1, wherein a diameter of the discharge hole (13) is smaller than a diameter of the ejection hole (11).

3. The electric motor (100) according to claim 1 or 2, wherein the discharge hole (13) is provided at a lowest portion of the refrigerant pipe (10).
